# EUROPEAN PATENT SPECIFICATION

(11) **EP 2 246 257 B1**
(45) Date of publication and mention of the grant of the patent: **17.02.2016**
(21) Application number: 09400018.9
(22) Date of filing: 29.04.2009
(51) Int. Cl.: B64C 27/33

(54) **Multi-section connecting region of a flexbeam**
Anschlussbereich mit mehreren Abschnitten für eine flexible Kupplung
Région de connexion de plusieurs sections d'une poutre de flexion

(43) Date of publication of application: 03.11.2010
(73) Proprietor: AIRBUS HELICOPTERS DEUTSCHLAND GmbH, 86609 Donauwörth (DE)
(72) Inventor: Schulz, Martin, 81739 München (DE); Wehle, Christian, 93138 Lappersdorf (DE)
(74) Representative: GPI & Associés

(56) References cited:
- FR-A- 2 660 619
- US-A- 5 228 834
- US-A- 5 738 494
- COPPINGER ROB: "five-blade bearingless rotor flies" FLIGHT INTERNATIONAL, 9 May 2006 (2006-05-09), pages 1-2, XP002550475 London & BANSEMIR HORST: "Weiterentwicklung des Lagerlosen Rotorsystems der EC 135 zum Advanced Technology Rotor" THEMENHEFT FORSCHUNG, 1 March 2007 (2007-03-01), pages 26-26, Stuttgart

## Description

The invention relates to a connecting region of a flexbeam according to the preamble of claim 1.

It is known that bearingless rotors have no hinges on the rotor head. The previously real hinges are replaced by a so-called flexbeam in this design and externalised into "fictitious hinges". A flexbeam has a connecting region by which means this is firmly connected to the rotor head. In addition, the flexbeam is provided with a transition region at which a rotor blade is fastened. A flexbeam is also characterised by the fact that it has regions of reduced stiffness. A region of reduced stiffness, for example, allows bending about the chord and is designated as impact axis.

A commonly used implementation of the fastening of the flexbeam on the rotor head consists in providing the connecting region with two loop-shaped connection points which serve to accommodate bolts. The bolts are inserted vertically through the rotor head and the loop-shaped connection points of the flexbeam for fastening and thus fix these in a torque-proof and pivot-proof manner on the rotor head.

In an embodiment already in series production, the flexbeams are disposed peripherally on the rotor head in such a manner that, for example, in each case one bolt passes through the respective connection point. The flexbeams attached in this manner peripherally in the rotor plane on the rotor head are located adjacent to one another and are usually fixed by bolts or fastening means at twice as many connection points as provided flexbeams.

This is also reflected in the documents US 5 738 494, US 5 372 479 and Int. J. Engng Ed. Vol. 13, No. 5, p. 369-375, 1997. Shown there are connecting regions which can be fixed in a plane on the rotor head with at least two bolts per flexbeam. This makes it possible to achieve a symmetrical configuration of the connecting region and provides a uniform stiffness distribution over the profile plane but offers less potential for reducing the impact axis distance.

DE 103 16 094 A1 discloses a connecting region of a flexbeam in which the connecting region completely encloses the rotor mast and absorbs the centrifugal forces. The torque is transmitted to the ends pointing away from the rotor blade. All the rotor blades lie one above the other. For exchanging the lowermost rotor blade or blade connection, all those located thereabove must also be dismounted.

US 4 746 272, US 4 898 515, CA 2411533C and US 6 708 921 describe a connecting region of a flexbeam which forms the connecting region of a second opposite flexbeam in the structural unit. This has the disadvantage that maintenance is expensive since two flexbeams always need to be changed concomitantly. In addition, due to the pairwise configuration it is not possible to provide an odd number of rotor blades.

From the flight-dynamic viewpoint, it is desirable to minimise the impact axis distance. The impact axis distance is the distance of the axis of the "fictitious" flapping hinge of the flexbeam from the rotor centre. This can be made possible by making the rotor head smaller. In order to achieve this, unlike the hitherto usual rotor head in which each connecting region is fastened with two bolts assigned exclusively to the two connection points, it is known to make respectively two connection points of the successive flexbeams overlap and thereby halve the number of bolts required. As a result, the total diameter of the rotor head can be reduced significantly. In this case, each bolt connects two connection points of two successive flexbeams to the rotor head. The connection points are configured in such a manner that a first connection point comprises two loops which are spaced apart in the vertical direction and the second connection point comprises two loops which lie together. In the mounted state the spaced-apart loops embrace the lying-together loops of the subsequent or the previous flexbeam.

This arrangement of the rotor blades is deduced from ECD 0158-06-PUB published at the Annual Meeting of the DGLR in Braunschweig in November 2006 as "Advanced Technology Rotor" ATR. This configuration achieves an improvement in the dynamic properties but has strength problems in the connection region as a consequence.

It is the object of the invention, whilst avoiding the aforesaid disadvantages, to provide a flexbeam with a connecting region which has a short impact axis distance and a high strength in the connecting region and ensures a high flexibility during maintenance.

The invention is based on the finding that the strength is increased by sandwich structures without necessarily incurring an increase in the material thickness. In addition, asymmetry in the stiffness is reduced by the multi-section property.

This object is achieved by the characterising features of claim 1 in conjunction with the features of its preamble.

The dependent claims form advantageous further developments of the invention.

In a known manner, a connecting region of a flexbeam comprises a first and a second connection point which lie largely along a line running orthogonally to the radial extension of the rotor head, each connection point being split into fastening attachments in the vertical direction. The fastening attachments have a circular recess for receiving a bolt wherein these lie coaxially above one another per connection point, so that a fastening means/bolt can be guided through all the fastening attachments of a connection point. Conventionally in a peripherally overlapping arrangement of a plurality of flexbeams on a rotor head, in each case the first connection point engages in the second connection point of a following flexbeam in such a manner that the recesses of the fastening attachments of the first connection point lie coaxially above the recesses of the fastening attachments of the associated second connection point.

According to the invention, the first connection point has at least two fastening attachments which are spaced apart from one another in the vertical direction. The second connection point is provided with at least three fastening attachments which are spaced apart from one another in the vertical direction. The second connection point is always provided with at least one fastening attachment more than the first connection point.

A multi-sectional introduction of forces is thereby made possible, with the result that the strength of the rotor mounting is significantly increased. Another major advantage resulting from the multi-sectional nature of the connection points is the stiffness distribution along a line aligned orthogonally to the radial extension of the rotor head. In contrast to the previous prior art, the difference in stiffness between the two regions of the connection points is significantly reduced since the differences in the angle of spread which crucially influence the stiffness are significantly reduced compared with the prior art.

In the prior art, for example, the fraction of the region of the second connection point in the total stiffness is about 90% whereas with a connecting region according to the invention, the fraction of the region of the second connection point comprises about 60% of the total stiffness.

The fastening attachments are disposed in such a manner than in a peripheral intermeshing arrangement of the flexbeam, the fastening attachments of the first connection point intermesh with fastening attachments of the second connection point in the vertical and horizontal direction. The connection points are embraced by the rotor head.

Due to the intermeshing arrangement, a reduction in the rotor head diameter is achieved. This results in the desired reduction of the impact axis distance. Due to the multiple overlapping of the loops of two successive rotor blades, the strength is increased without necessitating an enlargement in cross-section. An enlargement in cross-section would result in an increase in the stiffness of the flexbeam which in turn would lead to an undesirably large impact axis distance.

In a peripheral arrangement, all fastening attachments of the first connection point are preferably bordered on both sides by fastening attachments of the second connection point. In this way, at least one fastening attachment of the second connection point lies both over and under each fastening attachment of the first connection point. As a result, the strength is decisively increased.

According to a further advantageous embodiment, the fastening attachments of the connection points are formed from a fibre composite. This has a sufficient strength with low weight. It is particularly advantageous to form this directly on the torsional element of the flexbeam.

In particular, the upper fastening attachment of the first connection point and the upper fastening attachment of the second connection point can be formed from the same material. In the same way, the lower fastening attachment of the first and the second connection point can be formed from the same material ply. This considerably simplifies the manufacture of the flexbeam.

It is particularly advantageous if the middle fastening attachments are formed from different material plies. An increase in strength is thus achieved.

The fastening attachments are preferably configured as loop-shaped. This allows anchoring of the fastening attachments in the flexbeam and excellent multi-sectional introduction of forces.

Further advantages, features and possible applications of the present invention are obtained from the following description in conjunction with the exemplary embodiments shown in the drawings.

The invention is described in detail hereinafter with reference to the exemplary embodiments shown in the drawings. The terms and associated reference numerals used in the list of reference numerals given hereinafter are used in the description, in the claims and in the drawings.

In the drawings:
- Fig. 1: shows a section of a schematically depicted connecting region of a flexbeam in perspective view;
- Fig. 2: shows a schematic diagram of two successive flexbeams in perspective view;
- Fig. 3: shows a schematic plan view of the connecting region of a flexbeam;
- Fig. 4a: shows a cross-section through a flexbeam having a connecting region according to the prior art;
- Fig. 4b: shows a cross-section through a flexbeam having a connecting region according to the invention;
- Fig. 5a: shows a schematic sectional view of the first connection point of the flexbeam according to the invention;
- Fig. 5b: shows a schematic sectional view of the second connection point of the flexbeam according to the invention.

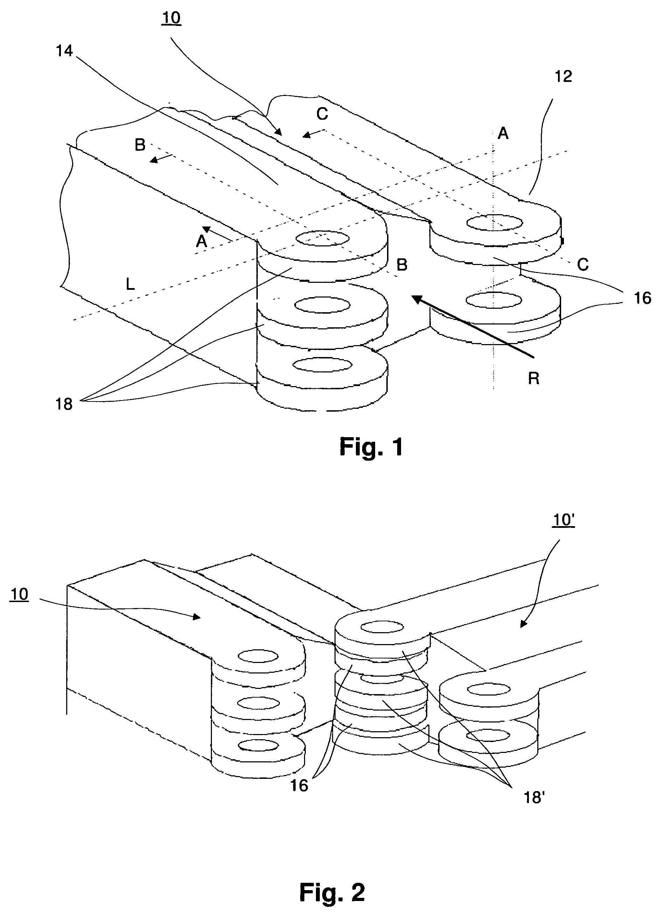

Figure 1 shows a schematic perspective view of a connecting region 10 of a flexbeam. Fastening attachments 16 of a first connection point 12 as well as fastening attachments 18 of a second connection point 14 are shown. The fastening attachments 16, 18 have circular recesses. The fastening attachments 16, 18 lie one above the other, spaced vertically, per connection point. The circular recesses lie coaxially with respect to one another according to the connection points. In addition, the axes of intersection A, B, C and the radial extension R of the rotor head are shown. The lines of intersection B and C lie parallel to the radial extension R of the rotor head and intersect the fastening attachments 16, 18 centrally. The line of intersection A lies orthogonally to the radial extension R of the rotor head and intersect the connecting region of the flexbeam behind the circular recesses of the fastening attachments 16, 18.

Figure 2 shows a schematic diagram of two successive connecting regions 10, 10' of identical flexbeams in intermeshing arrangement. In this case, the fastening attachments 16 of the first connection point 12 of the first flexbeam engage in the fastening attachments 18' of the second connection point 14' of the second flexbeam 10'. The recesses of the fastening attachments 16, 18 lie coaxially with respect to one another. As a result, respectively two intermeshing connection points 12, 14' can be fixed to the rotor head with a bolt or fastening means.

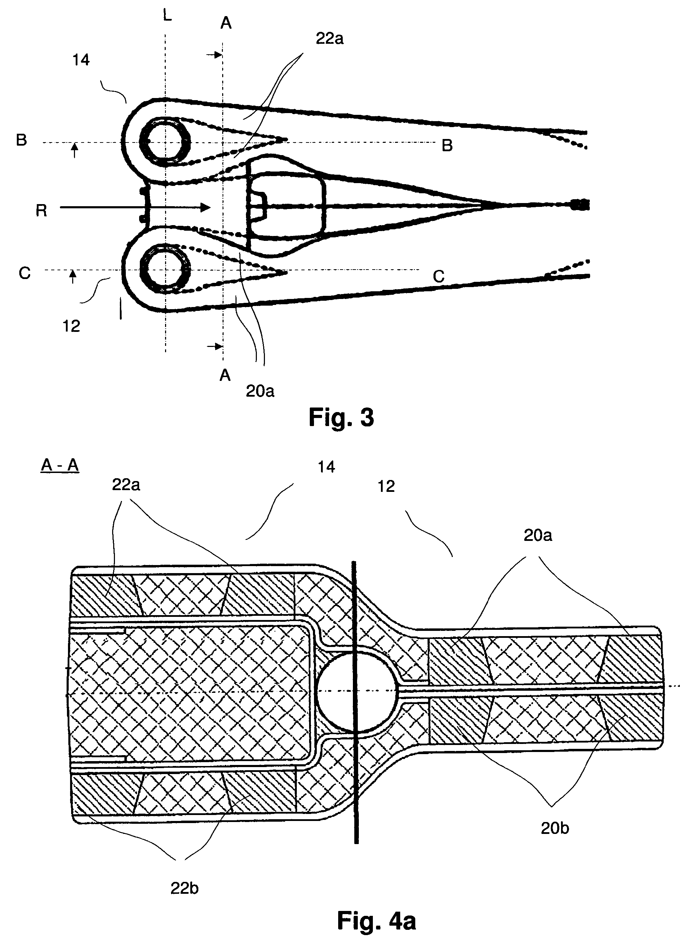

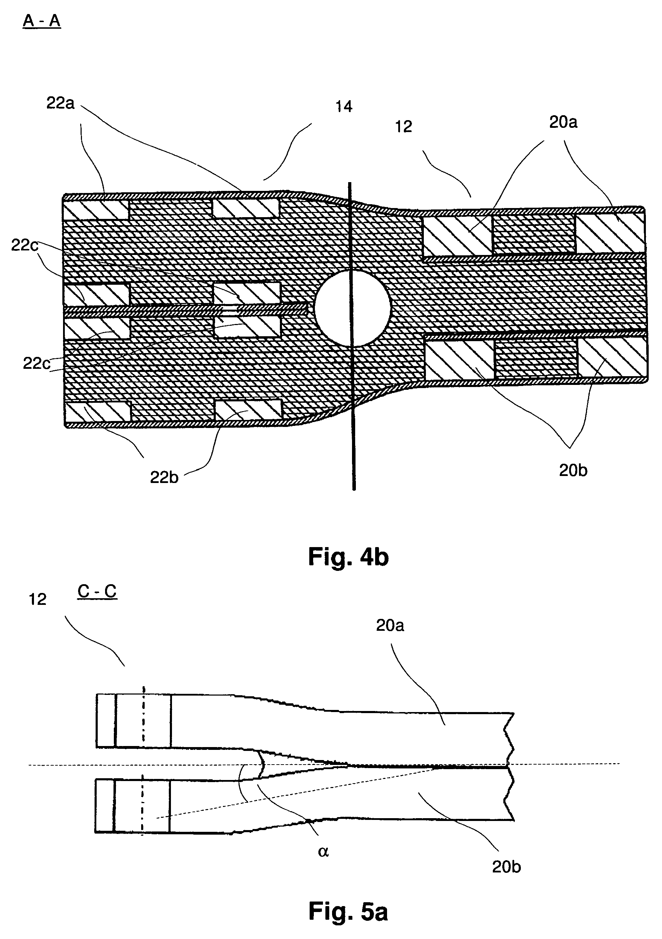

Figure 3 shows a plan view of a connecting region 10 of a flexbeam. This comprises a first connection point 12 and a second connection point 14. The loop-shaped configuration of the fastening attachments can be seen particularly clearly in this figure. The loop arms 20a, 22a are shown by dashed lines. The flexbeam can be connected to the rotor head by means of the connection points 12, 14. The line of intersection A is also indicated. Figures 4a and 4b show cross-sections along the line of intersection A.

Figure 4a shows a sectional view along the line of intersection A of a flexbeam according to the prior art. The fastening attachments 16, 18 are formed by loop arms 20a, 20b, 22a, 22b. The first connection point 12 has two loop arms 20a, 20b which lie together. The second connection point 14 is provided with two vertically spaced loop arms 22a, 22b. The remaining flexbeam, apart from the circular recess, is filled with fibre composite material. In this embodiment the stiffness distribution as a proportion of the total stiffness is obtained as 8% at the first connection point 12 and 92% at the second connection point 14.

Figure 4b shows the schematic sectional view along the line of intersection A of a flexbeam according to the invention. In this diagram the first connection point 12 is provided with two vertically spaced loop arms 20a, 20b. The second connection point 14 comprises three loop arms 22a, 22b, 22c which are spaced apart from one another in the vertical direction. The remaining flexbeam, apart from the circular recess, is filled with fibre composite material. In this embodiment the stiffness distribution as a proportion of the total stiffness is obtained as 37% at the first connection point 12 and 63% at the second connection point 14. It is shown that with the arrangement of the fastening attachments 16, 18 according to the invention, the stiffness distribution is significantly more balanced.

Figure 5a shows a schematic section along the line of intersection B. It can be seen very clearly here that contrary to the prior art, the first connection point 12 is divided into two spaced-apart fastening attachments. These are each spread at the angle of spread α from the centre line. In general, the angle of spread is crucial for the stiffness E1. Since the first connection point is already spread contrary to the prior art, the difference from the angle of spread β of the second connection point 14 is reduced and ensures a more uniform stiffness distribution.

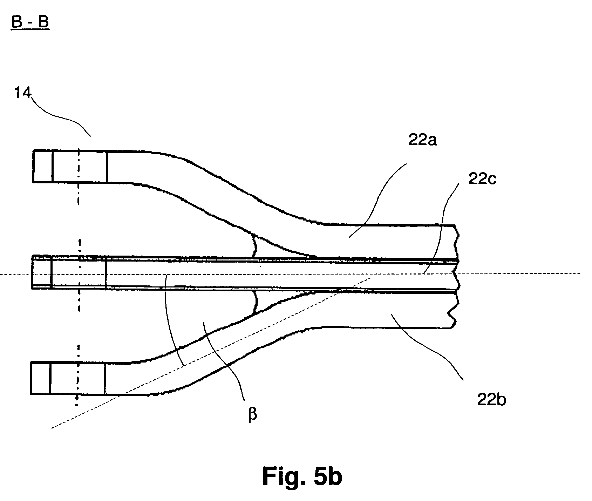

Figure 5b shows a schematic sectional view along the line of intersection C. In this case, the second connection point 14 is divided into three fastening attachments 18. The fastening attachments are formed by the loop arms 22a, 22b, 22c. The loop arms 22a and 22b are in each case spread at the angle of spread β from the loop arm 22c.

### REFERENCE LIST:

- 10: Connecting region
- 12: First connection point
- 14: Second connection point
- 16: Fastening attachment of first connection point
- 18: Fastening attachment of second connection point
- 10': Connecting region
- 14': Second connection point
- 18': Fastening attachment of second connection point
- 20a: Loop arm
- 20b: Loop arm
- 22a: Loop arm
- 22b: Loop arm
- 22c: Loop arm
- α: Angle of spread - first connection point
- β: Angle of spread - second connection point
- A: Line of intersection A-A
- B: Line of intersection B-B
- C: Line of intersection C-C
- L: Line
- R: Radial extension

## Claims

1. A flexbeam having a connecting region (10) for connection to a rotor head, wherein the connecting region (10) comprises a first connection point (12) and a second connection point (14), which lie adjacent to one another along a line (L) lying perpendicular to the radial extension (R) of the rotor head at the end of the flexbeam facing the rotor head,
**characterised in that** the first connection point (12) comprises at least two fastening attachments (16) located one above the other and spaced vertically apart from one another, which have circular recesses, wherein the fastening attachments (16) are aligned in such a manner that the recesses lie coaxially with respect to one another and the second connection point (14) is provided with at least one more fastening attachment (18) than the first connection point (12), wherein the fastening attachments (18) of the second connection point (14), which are spaced apart in the vertical direction and lie one above the other, are likewise aligned in such a manner than their coaxial recesses lie coaxially with respect to one another.

2. A flexbeam according to claim 1,
**characterised in that** the first connection point (12) of the connecting region (10) of a first flexbeam and the second connection point (14') of the connecting region (10') of an identical second flexbeam which lies adjacent to the first flexbeam in the mounted state, intermesh.

3. A flexbeam according to claim 2,
**characterised in that** all the fastening attachments (16) of a first connection point (12) can be enclosed on both sides in the vertical direction by fastening attachments (18') of the second connection point (14').

4. A flexbeam according to claim 1,
**characterised in that** all the fastening attachments (14, 16) are formed from the fibre composite material of the flexbeam.

5. A flexbeam according to one of the preceding claims,
**characterised in that** the fastening attachments (16, 18) of the two connection points (12, 14) located vertically at the top are formed from a first ply, the fastening attachments (16, 18) of the two connection points (12, 14) located at the bottom are formed from a second ply.

6. A flexbeam according to one of the preceding claims,
**characterised in that** the middle fastening attachment (18) of the second connection point (14) is formed from two different plies.

7. A flexbeam according to one of the preceding claims,
**characterised in that** the fastening attachments (16, 18) are formed as loop-shaped.

## Patentansprüche

1. Flexbeam mit einem Verbindungsbereich (10) zum Verbinden mit einem Rotorkopf, wobei der Verbindungsbereich (10) einen ersten Verbindungspunkt (12) und einen zweiten Verbindungspunkt (14) aufweist, die benachbart zueinander entlang einer Linie (L), die senkrecht zu der radialen Erstreckung (R) des Rotorkopfes ist, an dem Ende des Flexbeams, der dem Rotorkopf gegenüberliegt, liegen,
**dadurch gekennzeichnet, dass** der erste Verbindungspunkt (12) mindestens zwei Befestigungslaschen (16) aufweist, die übereinander und in senkrechter Richtung beabstandet voneinander angeordnet sind und kreisrunde Ausschnitte aufweisen, wobei die Befestigungslaschen (16) so ausgerichtet sind, dass die Ausschnitte koaxial zueinander angeordnet sind, und der zweite Verbindungspunkt (14) mit mindestens einer Befestigungslasche (18) mehr als der Verbindungspunkt (12) versehen ist, wobei die Befestigungslaschen (18) des zweiten Verbindungpunkts (14), die in senkrechter Richtung voneinander beabstandet sind und übereinander liegen, in gleicher Weise derart ausgerichtet sind, dass ihre koaxialen Ausschnitte koaxial zueinander angeordnet sind.

2. Flexbeam nach Anspruch 1,
**dadurch gekennzeichnet, dass** der erste Verbindungspunkt (12) des Verbindungsbereichs (10) eines ersten Flexbeams, und der zweite Verbindungspunkt (14') des Verbindungsbereichs (10') eines zweiten identischen Flexbeams, der im montierten Zustand benachbart zu dem ersten Flexbeam liegt, ineinandergreifen.

3. Flexbeam nach Anspruch 2,
**dadurch gekennzeichnet, dass** alle Befestigungslaschen (16) eines ersten Verbindungspunkts (12) auf beiden Seiten in der Vertikalrichtung durch Befestigungslaschen (18') des zweiten Verbindungspunkt (14') umschlossen sein können.

4. Flexbeam nach Anspruch 1,
**dadurch gekennzeichnet, dass** alle Befestigungslaschen (14, 16) aus dem Faserverbundmaterial des Flexbeams geformt sind.

5. Flexbeam nach einem der vorstehenden Ansprüche,
**dadurch gekennzeichnet, dass** die Befestigungslaschen (16, 18) der beiden Verbindungspunkte (12, 14), die in senkrechter Richtung oben angeordnet sind, aus einer ersten Lage geformt sind, und die Befestigungslaschen (16, 18) der beiden Verbindungspunkte (12, 14), die am unteren Ende angeordnet sind, aus einer zweiten Lage geformt sind.

6. Flexbeam nach einem der vorstehenden Ansprüche,
**dadurch gekennzeichnet, dass** die mittlere Befestigungslasche (18) des zweiten Verbindungspunkts (14) aus zwei verschiedenen Lagen geformt ist.

7. Flexbeam nach einem der vorstehenden Ansprüche,
dadurch gekenntzeichnet, dass die Befestigungslaschen (16, 18) schlaufenförmig geformt sind.

## Revendications

1. Un faisceau torsible pourvu d'une zone de connexion (10) pour la connexion à une tête de rotor, dans lequel la zone de connexion (10) comprend un premier point de connexion (12) et un second point de connexion (14), adjacents l'un à l'autre par rapport à une ligne (L) perpendiculaire au prolongement radial (R) de la tête de rotor à l'extrémité du faisceau torsible face à la tête de rotor,
**caractérisé en ce que** le premier point de connexion (12) comprend au moins deux attaches de fixation (16) situées l'une au-dessus de l'autre et séparée verticalement l'une de l'autre, pourvues d'évidements circulaires, dans lequel les attaches de fixation (16) sont alignées de telle manière que les évidements sont disposés coaxialement l'un par rapport à l'autre, et le second point de connexion (14) est pourvu d'au moins une attache de fixation (18) de plus que le premier point de connexion (12), dans lequel les attaches de fixation (18) du second point de fixation (14), séparés dans le sens vertical et disposés l'un au-dessus de l'autre, sont également alignés de telle manière que leurs évidements coaxiaux sont disposés coaxialement l'un par rapport à l'autre.

2. Un faisceau torsible selon la revendication 1,
**caractérisé en ce que** le premier point de connexion (12) de la zone de connexion (10) d'un premier faisceau torsible et le second point de connexion (14') de la zone de connexion (10') d'un second faisceau torsible identique adjacent au premier faisceau torsible en condition d'assemblage s'imbriquent.

3. Un faisceau torsible selon la revendication 2,
**caractérisé en ce que** les attaches de fixation (16) d'un premier point de connexion (12) peuvent être ceintes de chaque côté dans le sens vertical par les attaches de fixation (18') du second point de connexion (14').

4. Un faisceau torsible selon la revendication 1,
**caractérisé en ce que** les attaches de fixation (14, 16) sont formées à partir du matériau composite des fibres du faisceau torsible.

5. Un faisceau torsible selon l'une des revendications précédentes,
**caractérisé en ce que** les attaches de fixation (16, 18) des deux points de fixation (12, 14) situés verticalement au-dessus sont formées à partir d'un premier pli, les attaches de fixation (16, 18) des deux points de connexion (12, 14) situées en-dessous sont formées à partir d'un second pli.

6. Un faisceau torsible selon l'une des revendications précédentes,
**caractérisé en ce que** l'attache de fixation centrale (18) du second point de connexion (14) est formée à partir de deux plis différents.

7. Un faisceau torsible selon l'une des revendications précédentes,
**caractérisé en ce que** les attaches de fixation (16, 18) sont en forme de boucles.
